# EUROPEAN PATENT APPLICATION

(11) **EP 1 953 923 A1**
(43) Date of publication of application: **06.08.2008**
(21) Application number: 06832934.1
(22) Date of filing: 20.11.2006
(51) Int. Cl.: H04B 1/16, H04N 5/44

(54) **RECEIVER APPARATUS**

(30) Priority: 21.11.2005 JP 2005335806
(71) Applicant: FUJITSU TEN LIMITED, Kobe-shi Hyogo 652-8510 (JP)
(72) Inventor: TSUTSUI, Koichi, Kobe-shi, Hyogo, 652-8510 (JP); TAKAYAMA, Kazuo, Kobe-shi, Hyogo, 652-8510 (JP); NAGAMI, Masaaki, Kobe-shi, Hyogo, 652-8510 (JP); MIYANO, Takeshi, Kobe-shi, Hyogo, 652-8510 (JP)
(74) Representative: Skone James, Robert Edmund
(86) International application number: PCT/JP2006/323073
(87) International publication number: WO 2007/058341

(57) **Abstract**

The enclosure of the receiver device is divided into an antenna vicinity enclosure 1 and a demodulation unit enclosure 2, which are connected by a single transmission cable. By disposing the antenna vicinity enclosure 1 in the vicinity of the antenna, the high frequency feeder cable drawn from the antenna to the antenna vicinity enclosure 1 can be shortened. The effect of pulse noise and high frequency noise picked up by the conventional feeder cable can therefore be reduced. Furthermore, the length of the feeder cables in a quantity corresponding to the number of antennas is then reduced and the wiring space for the feeder cable can be reduced. The demodulation unit enclosure 2 is disposed spaced apart from the antenna, and the wiring space for the transmission cable can be greatly reduced in comparison with a case where a plurality of feeder cables are wired in the wiring space.

## Description

### TECHNICAL FIELD

The present invention relates to a receiver device for receiving signals on a plurality of channels by means of a plurality of antennas, and more particularly, to a receiver device which is suited to vehicle mounting where the installation space is limited.

### BACKGROUND ART

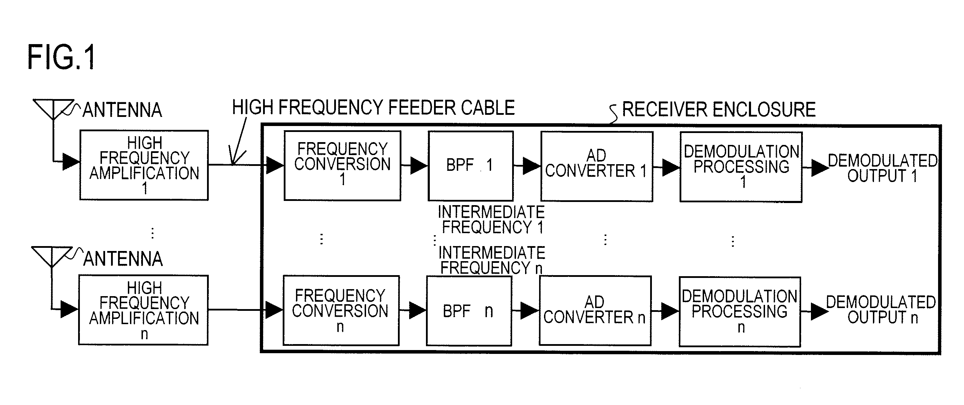

Fig. 1 shows a constitutional example of a conventional receiver device which receives a plurality of broadcast media. In the case of a vehicle receiver device which receives broadcast media of three types, namely, AM, FM, and digital TV, for example, a high frequency feeder cable such as a coaxial cable is used to supply reception signals from the antennas to the receiver main body and these reception signals are demodulated by means of separate hardware in the enclosure. In other words, the reception signals are frequency-converted, signals of only the required bandwidth are extracted as a result of being passed through a BPF (Band Pass Filter), and are converted into digital signals by means of an AD converter, whereupon demodulation processing is performed.

The following patent documents disclose reception processing by a receiver device which receives broadcast radio waves of a plurality of channels. Patent Document 1: Japanese Application Laid Open No. 2000-324003 Patent Document 2: Japanese Application Laid Open No. H10-257467 Patent Document 3: Japanese Application Laid Open No. 2002-26758 Patent Document 4: Japanese Application Laid Open No. H5-183459

The conventional constitution shown in Fig. 1 is confronted by the following problems.
(1) Feeder cables in a quantity corresponding to the number of antennas are required, and when there is a large number of antennas, the wiring space within the vehicle for the corresponding quantity of feeder cables (coaxial cables and so forth) is compressed and the mounting production costs are also large.
(2) When the antennas and receiver enclosure are spaced apart from one another, the feeder cables must be drawn over long distances and the effects of the characteristic pulse noise and high frequency noise coming from the vehicle are readily felt.
(3) There is a need for hardware which is different each time the specifications of the reception signals change.

### DISCLOSURE OF THE INVENTION

Therefore, an object of the present invention is to provide a receiver device in which the wiring space is kept to a minimum, which is not susceptible to pulse noise and high frequency noise, andwhichmakes it possible to reduce the hardware parts whichmust be replaced even in cases where the specifications of the reception waves change.

A first constitution of the receiver device of the present invention for achieving the above object has a first processing unit which is disposed in the vicinity of a plurality of first antennas, draws a feeder cable from each of the first antennas, converts each of reception signals of the first antennas into first digital signals and outputs the first digital signals; a first transmission cable which transmits the first digital signals which are output by the first processing unit; and a second processing unit which receives the first digital signals via the first transmission cable and demodulates the first digital signals.

A second constitution of the receiver device of the present invention is the first constitution of the receiver device, further having a third processing unit which is disposed in the vicinity of at least one second antenna, draws a feeder cable from the second antenna, and outputs a reception signal of the second antenna to the first processing unit, wherein the first processing unit converts the reception signal of the second antenna into a digital signal and outputs the digital signal.

A third constitution of the receiver device of the present invention is the first constitution of the receiver device, further having a third processing unit which is disposed in the vicinity of at least one second antenna, draws a feeder cable from the second antenna, converts the reception signal of the second antenna into a second digital signal, and outputs the second digital signal; and a second transmission cable which transmits the second digital signal which is output by the third processing unit, wherein the second processing unit receives the second digital signal via the second transmission cable, and demodulates the second digital signal.

A fourth constitution of the receiver device of the present invention is the first constitution of the receiver device, wherein the first processing unit performs gain control with respect to the reception signal on the basis of a reception signal level of each first antenna.

A fifth constitution of the receiver device of the present invention is the first constitution of the receiver device, wherein the second processing unit generates a gain control signal for controlling the gain with respect to the reception signals of the first antennas on the basis of the first digital signals; the receiver device further has a second transmission cable which transmits the gain control signal output by the second processing unit; and the first processing unit receives the gain control signal via the second transmission cable and performs gain control with respect to the reception signal on the basis of the gain control signal.

A sixth constitution of the receiver device of the present invention is the first constitution of the receiver device, wherein the second processing unit generates an operating parameter signal for designating the operation of the first processing unit; the receiver device further has a second transmission cable which transmits the operating parameter signal which is output by the second processing unit; and the first processing unit receives the operating parameter signal via the second transmission cable and operates on the basis of the operating parameter signal.

A seventh constitution of the receiver device of the present invention is any of the above first to sixth constitutions of the receiver device, wherein the first processing unit is housed in a first enclosure which is disposed in the vicinity of the first antenna and the second processing unit is housed in a second enclosure which is disposed spaced apart from the first enclosure.

According to the present invention, a reception processing antenna vicinity enclosure is disposed in the vicinity of a plurality of antennas and feeder cables from the plurality of antennas are drawn to the antenna vicinity enclosure. Hence, the plurality of feeder cables can be shortened, the feeder cable wiring space can be kept to a minimum, and the effect of the pulse noise and high frequency noise can be reduced. Furthermore, with a constitution in which an antenna vicinity enclosure and a demodulation processing demodulation unit enclosure are connected by means of a single transmission cable, the demodulation unit enclosure can be disposed in any position whatsoever irrespective of the position of the antennas. The wiring space can be reduced by transmitting the (converted) reception signals from the plurality of antennas by means of a single transmission cable rather than wiring a plurality of feeder cables.

### BRIEF DESCRIPTION OF THE DRAWINGS

[Fig. 1] A constitutional example of a conventional receiver device which receives a plurality of broadcast media;
[Fig. 2] A diagram which shows a first constitutional example of a receiver device of an embodiment of the present invention;
[Fig. 3] A diagram which shows a second constitutional example of the receiver device of the embodiment of the present invention;
[Fig. 4] A diagram which shows a third constitutional example of the receiver device of the embodiment of the present invention;
[Fig. 5] A diagram which shows another constitutional example of an antenna vicinity enclosure 1;
[Fig. 6] A diagram which shows yet another constitutional example of the antenna vicinity enclosure 1.;
[Fig. 7] A diagram which shows a modified example of the constitutional example in Fig. 6;
[Fig. 8] A diagram which shows an example of the peripheral constitution of the AD converter 14;
[Fig. 9] A diagram which shows a modified example of the constitutional example in Fig. 8;
[Fig. 10] A diagram which shows a data constitution example of a serial data send unit 16 in a case where sampling rates are the same;
[Fig. 11] A diagram which shows a data constitution example of the serial data send unit 16 in a case where sampling rates are different;
[Fig. 12] A diagram which shows a modified example of the first constitutional example of Fig. 2 which performs gain control;
[Fig. 13] A diagram which shows another modified example of the first constitutional example of Fig. 2 which performs gain control;
[Fig. 14] A diagram which shows a constitutional example of a control unit 51 in a case where a PWM signal is used as the gain control signal;
[Fig. 15] A diagram which shows a constitutional example of a control data analysis unit 54 in a case where a PWM is employed as the gain control signal;
[Fig. 16] A diagram which shows a constitutional example of a case where various operating parameters are set for the antenna vicinity enclosure 1 by the demodulation unit enclosure 2;
[Fig. 17] A perspective view from a rear oblique direction of a vehicle 300 in which the receiver device of this embodiment is mounted;
[Fig. 18] A planar view of the vehicle 300 in which the receiver device of this embodiment is mounted;
[Fig. 19] A diagram which illustrates a first example of the receiver device of this embodiment;
[Fig. 20] A diagram which illustrates an example of the frequency disposition of received waves, the transmission clock frequency, and the distribution of the frequency components of the transmission signal;
[Fig. 21] A diagram which illustrates the relationship between the transmission clock and the transmission signal;
[Fig. 22] A diagram which illustrates the second example of the receiver device of this embodiment;
[Fig. 23] illustrates a third example of the receiver device of this embodiment;
[Fig. 24] A diagram which illustrates a fourth example of the receiver device of this embodiment; and
[Fig. 25] A diagram which illustrates a fifth example of the receiver device of this embodiment.

### LIST OF ELEMENTS

1: antenna vicinity enclosure, 2: demodulation unit enclosure, 3: serial data transmission cable, 10: antenna, 11: high frequency amplification unit, 12:frequency conversion unit, 13: BPF, 14: AD converter, 15: multiplexing unit, 16: serial data send unit, 17: LPF, 18: down sampling unit, 19: orthogonal transformation unit, 20: serial data reception unit, 21: (de)multiplexing unit, 22: demodulation processing unit, 50: gain control unit, 51: control unit, 52: control data send unit, 53: control data reception unit, 54: control data analysis unit, 4: transmission clock judgment unit, 16a: transmission clock generation unit, and 20a: reception clock generation unit.

### BEST MODE FOR CARRYING OUT THE INVENTION

Embodiments of the present invention will be described next with reference to the drawings. However, these embodiments do not limit the technological scope of the present invention. Although a vehicle-mounted receiver device is illustrated by way of an example in the following embodiments, the present invention is not limited to a vehicle-mounted receiver device.

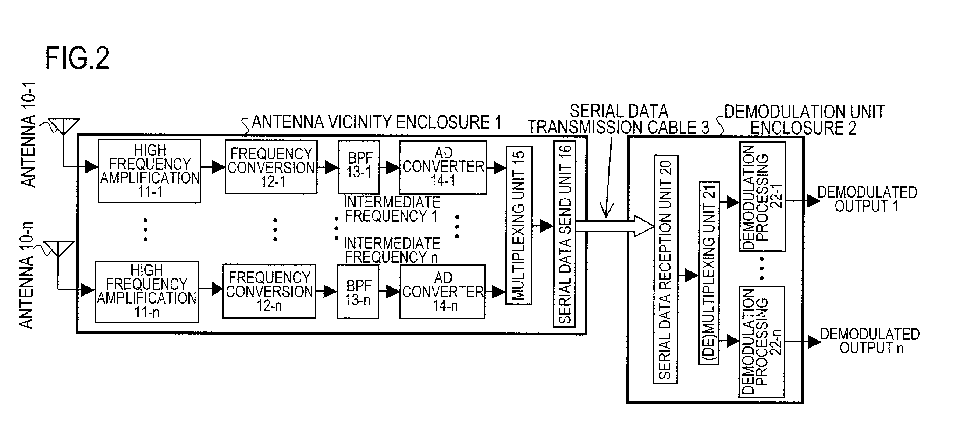

Fig. 2 shows a first constitutional example of a receiver device of an embodiment of the present invention. The receiver device of this embodiment divides the enclosure of the receiver device into the antenna vicinity enclosure 1 which is disposed in the vicinity of the antennas and the demodulation unit enclosure 2 which is disposed in a position spaced apart from the antenna vicinity enclosure 1, and the antenna vicinity enclosure 1 and demodulation unit enclosure 2 are connected by a single serial data transmission cable 3.

Thus, by dividing the receiver device enclosure into a plurality of enclosures and disposing the antenna vicinity enclosure 1 in the vicinity of the antennas, the high frequency feeder cables drawn from the antennas to the antenna vicinity enclosure 1 can be shortened. Hence, the effect of pulse noise and high frequency noise picked up by the conventional feeder cable can be reduced and an improvement in the reception sensitivity due to a reduction in the feeder cable loss is achievable. In addition, the length of the feeder cables in a quantity corresponding to the number of antennas is reduced and the wiring space for the feeder cable can be reduced. If electronic device technologies with a rapid pace of development in recent years are employed, miniaturization in which the antenna vicinity enclosure is disposed directly below the antennas can also be implemented.

Furthermore, the freedom for mounting the receiver device in an automobile into which electronics have been heavily introduced in recent years can be increased by disposing the demodulation unit enclosure 2 in an optional space in the vehicle.

In addition, because the antenna vicinity enclosure 1 and demodulation unit enclosure 2 are connected only by the transmission cable 3 which sends serial data and feeder cable (not illustrated), the wiring space can be reduced in comparison with the wiring of a conventional plurality of coaxial cables (feeder cables).

The signal processing of the constitution in Fig. 2 will now be described. The reception signals of a plurality of antennas 10-1 to 10-n are amplified by high frequency amplification units 11-1 to 11-n respectively before being frequency-converted by frequency conversion units 12-1 to 12-n to become intermediate frequency signals, passing through BPF (Band Path Filters) 13-1 to 13-n, and being input to AD converters 14-1 to 14-n.

The intermediate frequency signal is multiplexed to produce a preset format by the multiplexing unit 15 after being converted into digital data by the AD converters 14-1 to 14-n. These multiplexed data are parallel data in units of a determined number of bits. The serial data send unit 16 converts the multiplexed parallel data into serial data before sending the serial data. The serial data are transmitted by a single cable and a serial data reception unit 20 converts the received serial data into parallel data. The (de)multiplexing unit 21 uses the same format as the multiplexing unit 15 to distribute signals to the respective demodulation processing units 22-1 to 22-n as the signals of the original signal channels. The demodulation processing units 22-1 to 22-n demodulate and output the respective signals (appear hereinbelow with the subscripts 1 to n representing a plurality of elements omitted).

According to this constitution, the transmission signals are serial data. Hence, the transmission cable can be minimized and the wiring reduced. In addition, if a programmable device such as a DSP is used, the respective demodulation units are capable of changing the specifications of the reception waves by means of software without changing the hardware. In the constitutional example of Fig. 2, the constitution is such that the intermediate frequency is sampled by the AD converters 14 but cases where a high frequency signal is sampled directly also fall within the scope of the present invention. The demodulation processing units 22 are also capable of demodulating a plurality of reception signals by means of a single DSP processor.

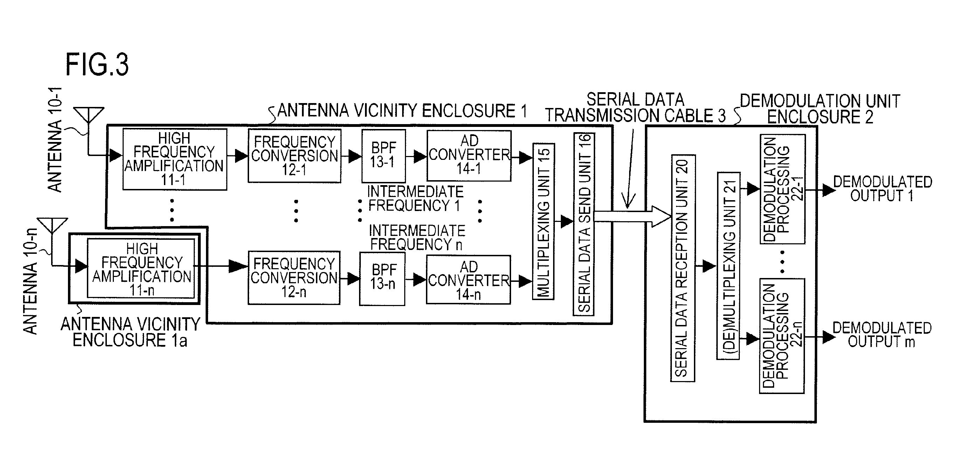

Fig. 3 shows a second constitutional example of the receiver device of the embodiment of the present invention. The second constitutional example is a constitutional example in which, in cases where it is necessary to keep a distance between the antennas as in diversity reception or the like, only a high frequency amplification unit (11-n, for example) for a specified antenna (10-n, for example) has another antenna vicinity enclosure 1a. Variations in which any part from the antenna 10 to the AD converter 14 is in a separate enclosure depending on the cable length due to the antenna position and the permitted size of the enclosure fall within the scope of the present invention. In other words, in addition to the high frequency amplification units 11, the frequency conversion units 12 and also the BPF 13 maybe separate enclosures, at least for one specified antenna.

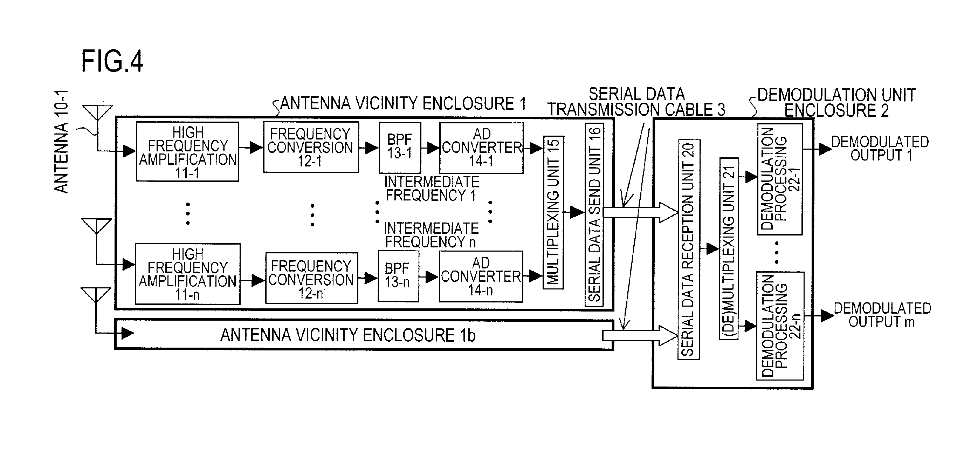

Fig. 4 shows a third constitutional example of the receiver device of the embodiment of the present invention. Like the second constitutional example in Fig. 3, the third constitutional example is a constitutional example in which there it is necessary leave a distance between the antennas in the case of diversity reception or the like and represents a constitutional example in which the whole antenna vicinity enclosure is a separate enclosure 1b at least for one specified antenna. This constitutional example is not limited to a case where it is necessary to leave a distance between the antennas as in the case of digital television of which amount of serial transmission data is large . Rather, this constitutional example can also be employed when compatibility with a single serial data transmission cable is problematic.

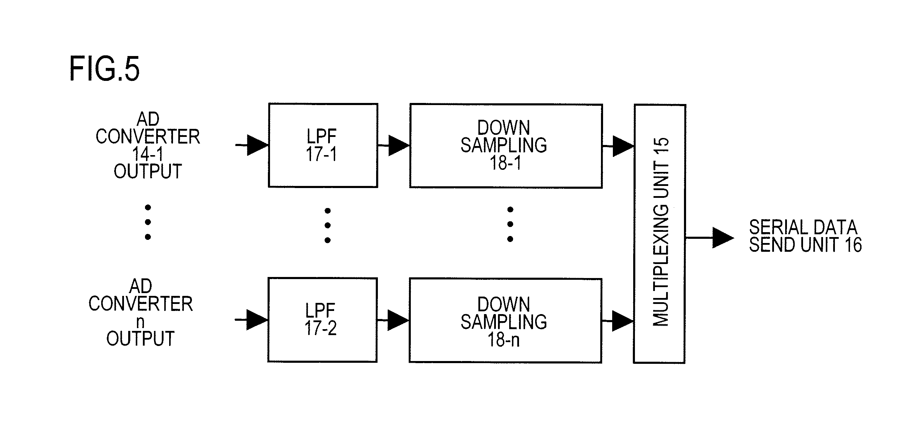

Fig. 5 illustrates another constitutional example of the antenna vicinity enclosure 1. In the constitutional example of Fig. 5, LPF (Low Pass Filter) 17-1 to 17-n and down sampling units 18-1 to 18-n are provided between the AD converters 14 and the multiplexing unit 15. In the case of signals of an extremely narrow bandwidth as with an AM broadcast, the dynamic range can be increased by sampling at a higher speed than when sampling at a low speed and down sampling. Hence, as shown in the constitutional example in Fig. 5, the constitution is such that a signal which has been AD-converted may also be thinned (undergo decimation).

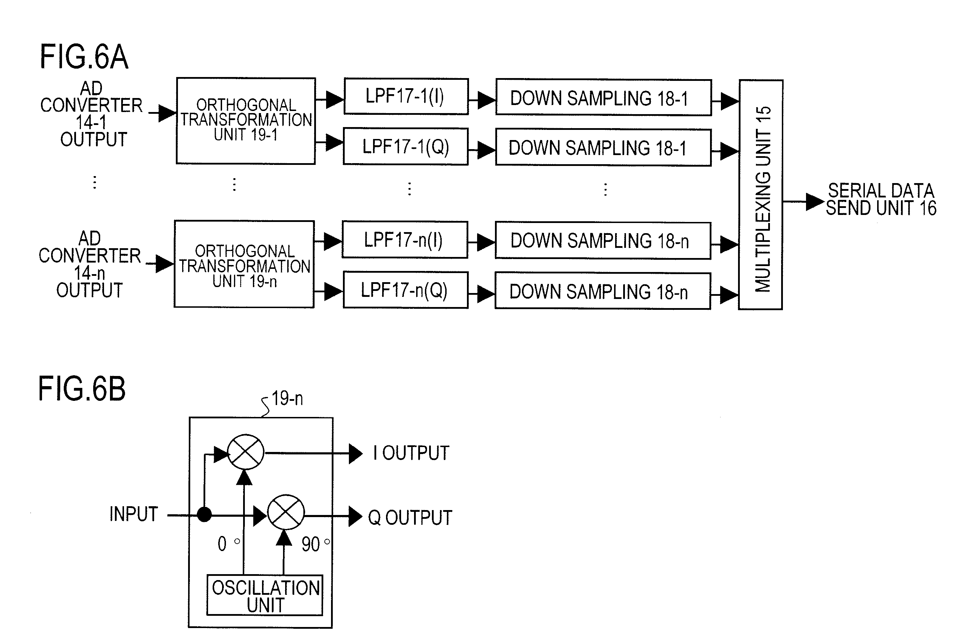

Fig. 6 illustrates yet another constitutional example of the antenna vicinity enclosure 1. In the constitutional example of Fig. 6, the outputs of the AD converters are subjected to orthogonal transformation by the orthogonal transformation units 19-1 to 19-n, are divided into an in-phase component (I component) and a quadrature component (Q component), whereupon down sampling is performed. As a result of the constitution in Fig. 6 which has orthogonal transformation units 19, a carrier and a signal which have a 90° phase difference are multiplied to perform orthogonal transformation in order to produce a transformation into a signal whose baseband is centered on the modulated carrier wave or a signal which has a low intermediate frequency (IF). With this constitutional example, the data rate required for transmission can be lowered and system setup can be facilitated.

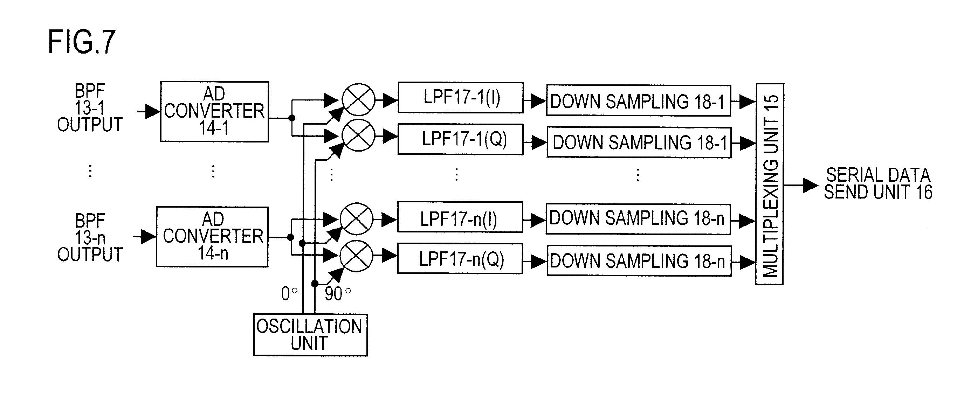

Fig. 7 shows a modified example of the constitutional example in Fig. 6. More specifically, this is a constitution in which the orthogonal transformation units 19 of the respective signal channels have a common oscillation unit. In cases where the input frequencies (intermediate frequencies) of the AD converters match, the frequencies of the orthogonal transformation oscillation units can be a single common frequency and the circuit is simplified as shown in Fig. 7.

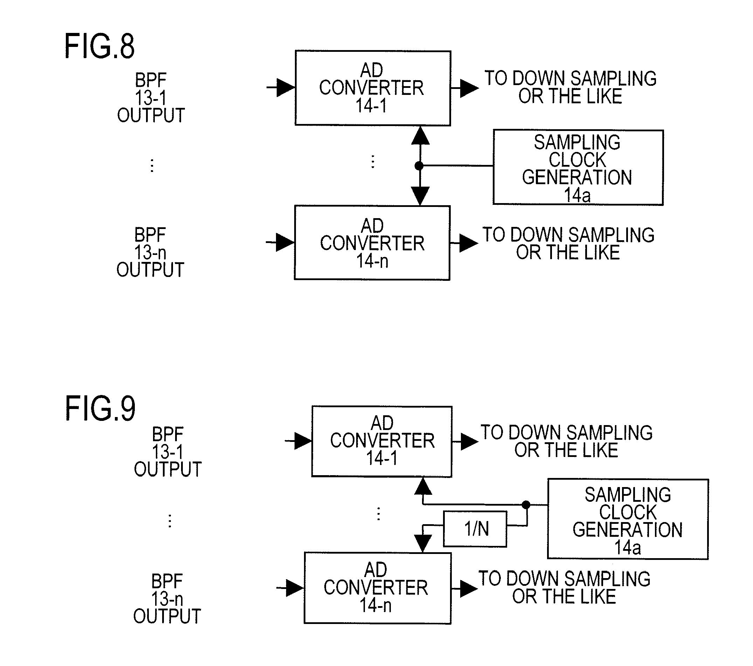

Fig. 8 shows an example of the peripheral constitution of the AD converter 14. The AD converter 14 requires a sampling clock circuit which is used for sampling conversion timing. However, as shown in the constitutional example of Fig. 7, one sampling clock generation unit 14a supplies a sampling clock to a plurality of AD converter 14. Thus, a circuit which can be constituted by a single sampling clock circuit 14a can be simplified by making the sampling rates uniform for all of the signal channels.

Fig. 9 shows a modified example of the constitutional in Fig. 8. Ideally, the sampling conversion frequencies of the AD converters 14 are desirably uniform. However, this is sometimes difficult depending on the case. In this case, the sampling clock generation unit 14a is able to generate the fastest sampling clock and is able to suppress an increase in the circuit by using a clock which is divided into 1 over a natural number N (1/N) if necessary.

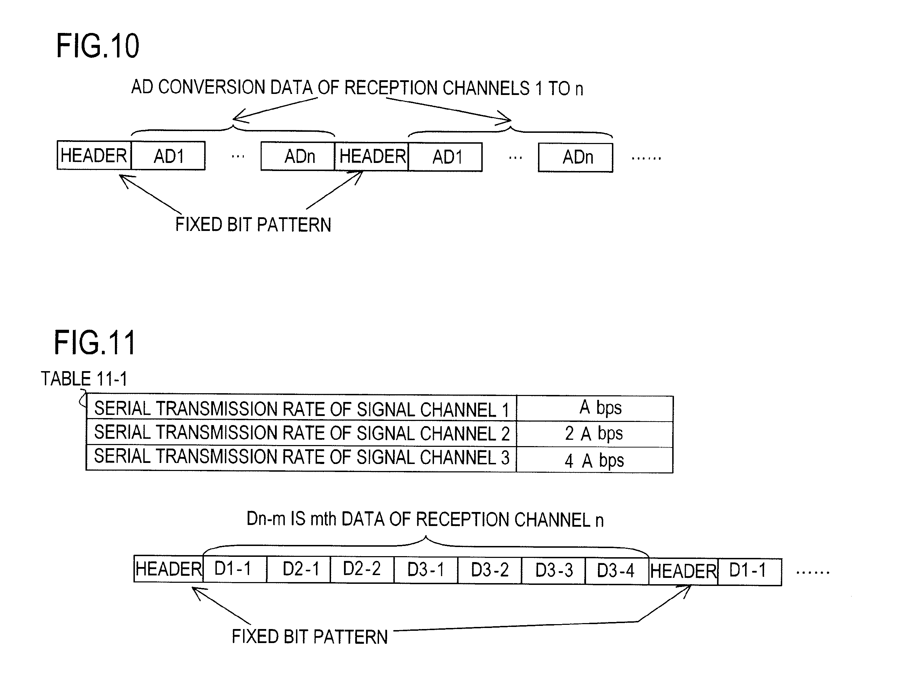

Fig. 10 shows a data constitutional example of the serial data send unit 16 in a case where the sampling rates are the same. In cases where the sampling rates of the signals input to the multiplexing unit 15 are the same for all of the signal channels, as shown in Fig. 10, the format of the signals sent by the serial data send unit 16 can be simplified by sequentially allocating the output data from each of the AD converters 14, and the multiplexing unit 15, serial data send unit 16, the serial data reception unit 20, and the (de)multiplexing unit 21 can be simplified.

In a case where an exact format is not as shown in Fig. 10 in a situation where the serial data transmission rate is that of the operating clock, the transmission rates can be matched by inserting dummy data after [ADn] data.

Fig. 11 shows the data constitutional example of the serial data send unit 16 in a case where the sampling rates are different. In cases where the sampling rates (transmission rates) of the signals which are input to the multiplexing unit 15 differ as shown in Table 11-1, as shown in Fig. 11, a relatively simple format can be established by allocating the output data from the respective AD converters 14 in accordance with the ratio between the transmission rates and the multiplexing unit 15, serial data send unit 16, the serial data reception unit 20, and the (de)multiplexing unit 21 can be simplified.

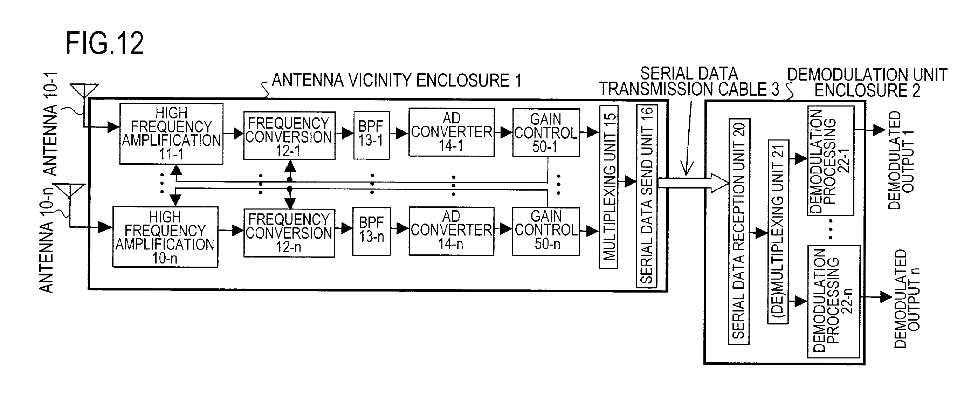

Fig. 12 shows a modified example of the first constitutional example of Fig. 2 which performs gain control. In the constitutional example of Fig. 12, the gain control units 50-1 to 50-n which are autogain control (AGC) circuits perform gain control in accordance with the output level (reception level) of the AD converter 14. Generally, the signal levels (amplitude) input to the receiver vary greatly depending on the reception state and the dynamic range required is extremely wide, being equal to or more than 100 dB. Therefore, although autogain control (AGC) circuits are used, the AGC control wires from the demodulation unit enclosure 2 can be dispensed with by implementing a constitution in which the entire control loop of the gain control is within the antenna vicinity enclosure 1 as per the constitutional example of Fig. 12. The constitutional example of Fig. 12 is a constitutional example in which the reception levels (amplitudes) are detected and controlled after performing digitization by means of AD converters. However, constitutions which detect and control the amplitude as an analog at a stage prior to the AD converters also falls within the scope of the present invention.

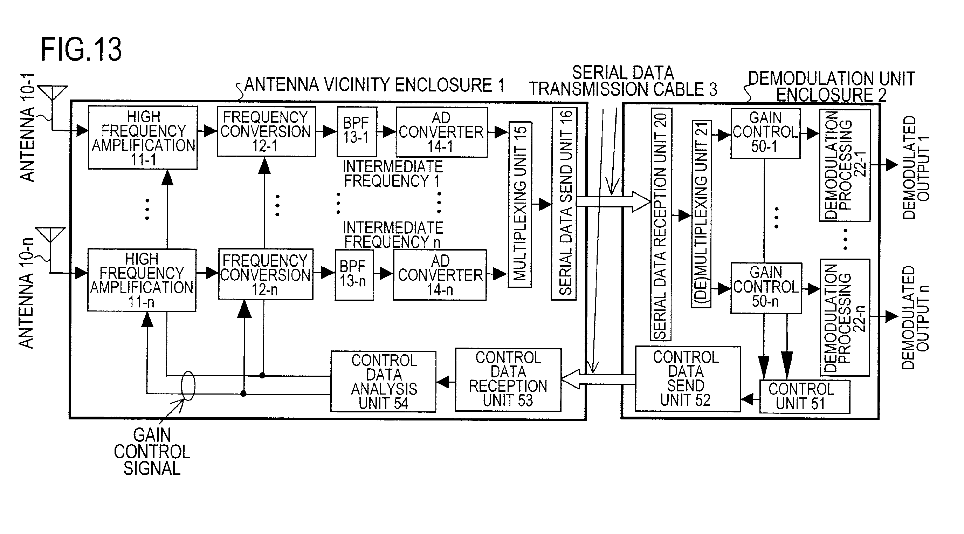

Fig. 13 shows another modified example of the first constitutional example of Fig. 2 which performs gain control. Although the AGC control wire can be reduced in the constitutional example of Fig. 12, if the gain control unit is an IC in the digital processing, detection, and modification of the control algorithm is problematic and it is sometimes difficult to flexibly adapt to the reception media. In addition, the insertion of a complex processing circuit in the analog processing is disadvantageous in terms of space and costs.

In the constitutional example of Fig. 13, the constitution is such that a gain control unit 50 is provided in the demodulation unit enclosure 2 and AGC control information from the demodulation unit enclosure 2 are converted into data and sent to the antenna vicinity enclosure 1. More specifically, the control unit 51 in the demodulation unit enclosure 2 converts a gain control signal from the gain control unit 50 into control data. The control data are sent from a control data send unit 52 in the demodulation unit enclosure 2 to a control data reception unit 53 in the antenna vicinity enclosure 1. The control data analysis unit 54 in the antenna vicinity enclosure 1 divides the control data into each of the respective signal channels to restore the control data to analog gain control signals and supplies same to the respective signal channels. As a result of this constitution, AGC control corresponding to reception media is made possible through gain control using a programmable device such as a DSP. In addition, the dynamic range can be made more stable through the combined usage of the gain control of the constitution in Fig. 12.

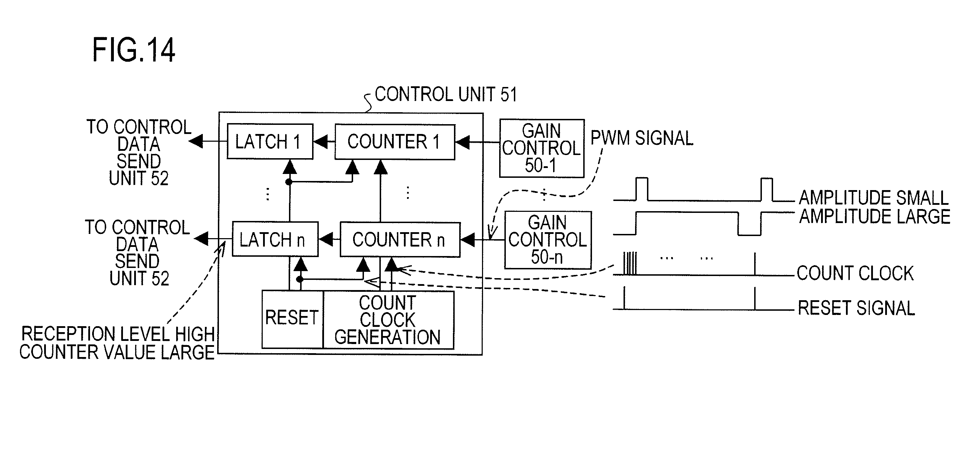

Fig. 14 shows a constitutional example of the control unit 51 in a case where a PWM signal is used as the gain control signal. In the constitutional example of Fig. 13, a case where there is no free terminal for outputting the gain control signal to the control unit 51 as data because the device used as the gain control unit 50 is also used with the demodulation processing, or similar, is considered. In this case, a high-speed control operation is not generally determined via autogain control. Hence, in cases where the device has a logic output terminal, as shown in Fig. 14, the gain control signal is output as a pulse width modulation (PWM) signal with a pulse width corresponding to the reception level and the control unit 51 counts the pulse width corresponding to the reception level by means of a counter, latches the counter value by means of a latch circuit, and outputs the counter value as control data. As a result, the AGC control line can be increased through the addition of a simple logic circuit.

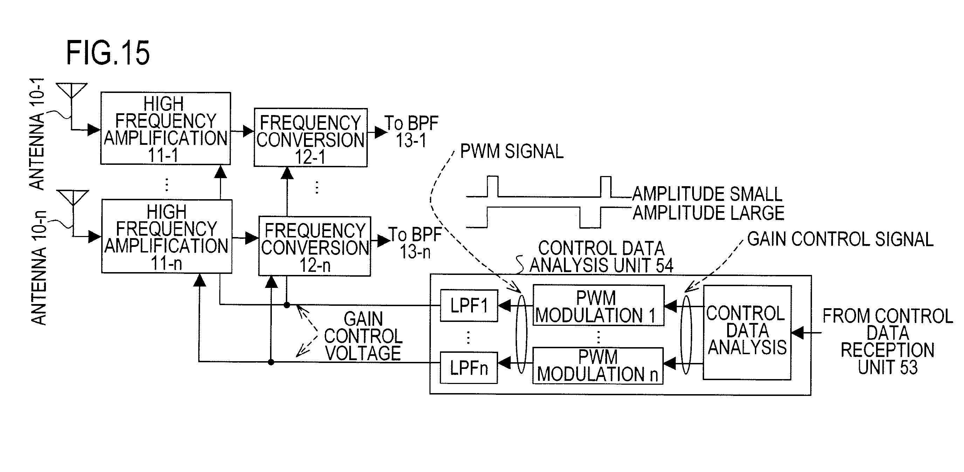

Fig. 15 shows a constitutional example of the control data analysis unit 54 in a case where PWM is used as the gain control signal. As shown in Fig. 15, the received control data can be converted into a pulse width modulation (PWM) signal by means of PWM and the PWM signal can be converted into a control voltage as a result of being passed through a lowpass filter (LPF).

Although there are methods of using a DA converter for each of the signal channels in cases where the gain control signal is converted into a gain control voltage, the method which of passing the PWM signal through a LPF permits a reduction in costs in comparison with methods which employ a DA converter.

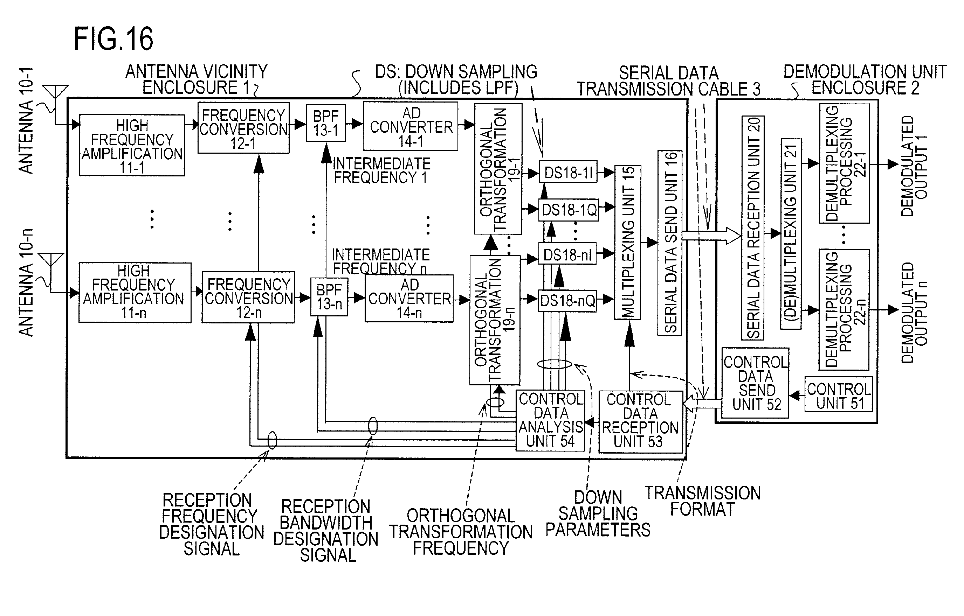

Fig. 16 shows a constitutional example of a case where various operating parameters are set for the antenna vicinity enclosure 1 by the demodulation unit enclosure 2. In the constitutional example of Fig. 16, the operating parameters in (1) to (5) below can be set for each of the signal channels of the antenna vicinity enclosure 1 by the demodulation unit enclosure 2, for example. The operating parameters are not limited to those illustrated. As far as the constitution is concerned, as per the gain control constitution illustrated in Fig. 13, the demodulation unit enclosure 2 is provided with the control unit 51 and the control data send unit 52 which generate the parameter control signals of (1) to (5) below and the control data are sent to the antenna vicinity enclosure 1 via the serial data transmission cable. The control data reception unit 53 of the antenna vicinity enclosure 1 receives the control data and the control data analysis unit 54 supplies the various operating parameter signals to the control target elements.

As a result, the operating parameters of the antenna vicinity enclosure 1 can be set by the demodulation unit enclosure 2. The overwriting of the set values and the substitution of the program of the demodulation processing unit, that is, reception of various media is possible using the same hardware through the modification of software.
(1) Reception Frequency
   The reception frequency is set as a result of setting the frequency of the conversion local oscillator of the frequency conversion unit.
(2) Reception bandwidth
   Set the BPF bandwidth.
(3) Down sampling parameters
   Set the parameters for down sampling, such as decimation, the number of LPF stages, and coefficient values (characteristics), for example. Increasing the sampling rate and making the decimation ratio variable has the advantage that a more flexible design for the overall reception system is straightforward.
(4) Orthogonal transformation frequency
   The oscillation frequency for the orthogonal transformation is set. The center of the signal sent to the demodulation unit can be set to zero IF (the baseband) or can be lowered to a low IF by setting the orthogonal transformation oscillation frequency. Fine adjustment of the reception frequency can also be used.
(5) Transmission format
   If the signal channels (transmission media) are changed, the required serial data transmission amount also changes. In cases where the data transmission rates for each of the signal channels are different, it is possible to flexibly adapt to a plurality of media by setting the bit count of a single sample, the order in which data are sent (format), and the number of dummy data, and so forth.

The high frequency amplification unit, frequency conversion unit, and BPF are implemented by analog technology, and because the range which can be covered by a single device is currently limited, hardware is required for each broad reception band.

However, if the variable range of the operable bandwidths and reception bandwidths can be increased in the near future, the possibility of receiving reception media with different reception bands only by modifying the software without changes to the hardware of the analog parts can be expected.

The content of the embodiments of the present invention was described hereinabove. However, cases where these embodiments are combined and where the constitution differs for each signal channel also fall within the scope of the present invention. For example, a constitution where the output of the AD converter is input directly to the multiplexing unit on a certain signal channel and input to the multiplexing unit from the AD converter on a separate signal channel via an orthogonal transformation unit and down sampling unit is possible.

### (Example)

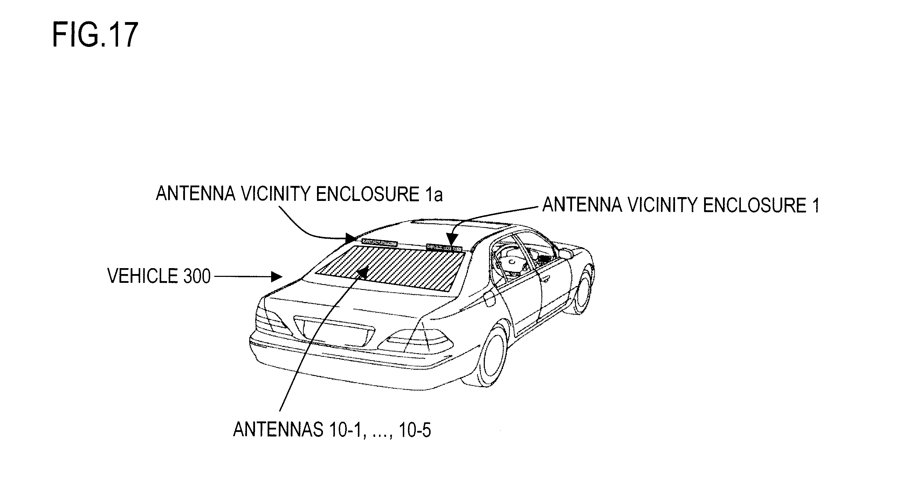

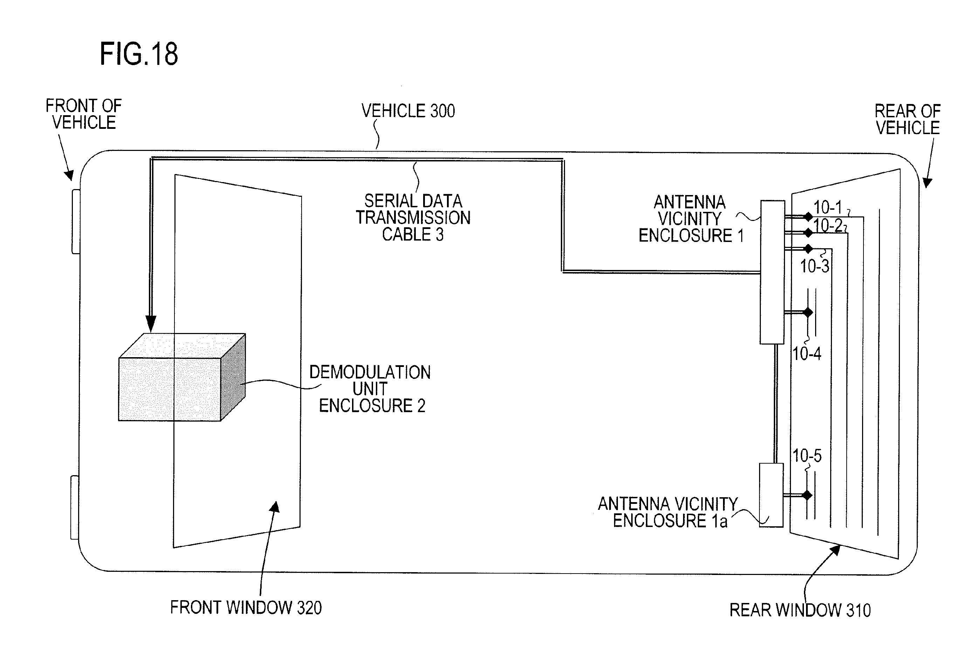

Figs. 17 and 18 illustrate a case where the receiver device of the embodiment above is mounted in a vehicle. Fig. 17 is a perspective view of vehicle 300 as seen from a rear oblique direction. Fig. 18 is a planar view of vehicle 300 and shows a state where a receiver device which comprises antenna vicinity enclosures 1 and 1a shown in Fig. 3 is mounted. The antenna vicinity enclosures 1 and 1a are mounted in the vehicle above the rear window 310 at the back of the vehicle and cannot be seen from the outside due to the finish on the rear window 310. Furthermore, the antenna 10-1 to 10-5 are formed in the rear window 310 by an antenna element, feeder cables from the antennas 10-1 to 10-4 are introduced to the antenna vicinity enclosure 1 and a feeder cable from antenna 10-5 is introduced to the antenna vicinity enclosure 1a. Further, the serial data transmission cables 3 which are coaxial cables or the like from the antenna vicinity enclosures 1 and 1a are laid within the vehicle and connected to the demodulation unit enclosure 2 which is laid in the vicinity of the front window 320 at the front of the vehicle.

In the receiver device of the above embodiment, the antenna vicinity enclosure 1 is laid in the vicinity of the antenna, and therefore, the serial data transmission cable 3 and antenna 10 are adjacent to one another. In so doing, the radiation caused by the transmission signal of the serial data transmission cable 3 sometimes affects reception waves. For example, when a transmission clock corresponding to a transmission rate of 500 to 600 Mbps is employed in order to implement high-speed signal processing, the frequency bandwidth of the radiated electromagnetic waves overlaps 470 MHz to 770 MHz which is the frequency bandwidth of the radiated waves of a terrestrial digital television. As a result, when a channel of a frequency bandwidth which overlaps the frequency bandwidth of the frequency bandwidth of the radiated waves is to be received, the signal to noise ratio of the reception wave drops as a result of the radiation noise and deterioration of the reception signal occurs. Accordingly, an example of a receiver device which prevents deterioration of reception signals caused by radiation noise due to the transmission signal in the above embodiment will be described hereinbelow.

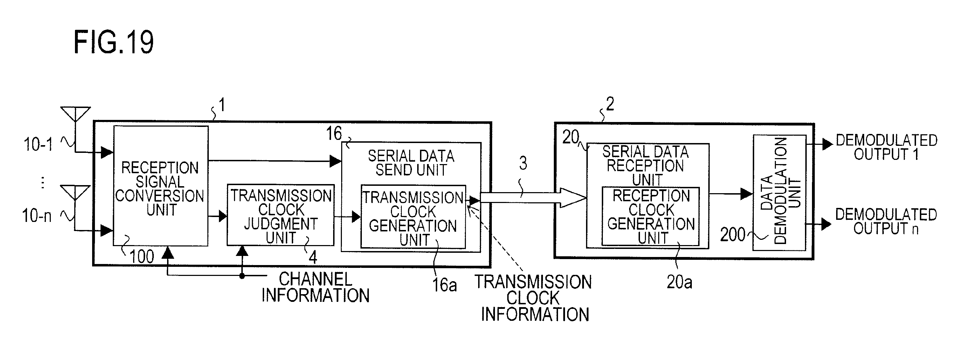

Fig. 19 illustrates a first example of the receiver device of this embodiment. The reception signal conversion unit 100 of the antenna vicinity enclosure 1 of this example is constituted by high frequency amplification units 11, the frequency conversion unit 12, the BPF 13, the AD converter 14, and the multiplexing unit 15 which are shown in Fig. 2. In the reception signal processing unit 100, reception signals of selected channels are converted from the reception waves received by the antenna 10 into digital data signals on the basis of the channel information selectively entered by the user which is input by a vehicle-mounted device or the like (not shown) via signal wires and multiplexed parallel data are supplied to the serial data send unit 16.

Here, the antennas and the processing channels which correspond therewith may be constituted such that each of the antennas and the processing channels thereof are allocated to broadcast waves of different channels, for example such that the channel of antenna 10-1 is allocated to terrestrial digital television broadcasts, antenna 10-2 is allocated to FM broadcasts, and antenna 10-3 is allocated to AM broadcasts, and in cases where there is a plurality of output channels, as in a case where a vehicle-mounted device is installed in each vehicle seat and different broadcasts are received by each device, for example, the constitution may be such that an antenna and a processing channel are allocated to each vehicle-mounted device. Alternatively, the constitution may be such that broadcast waves of the same channel are received via diversity reception by a plurality of antennas.

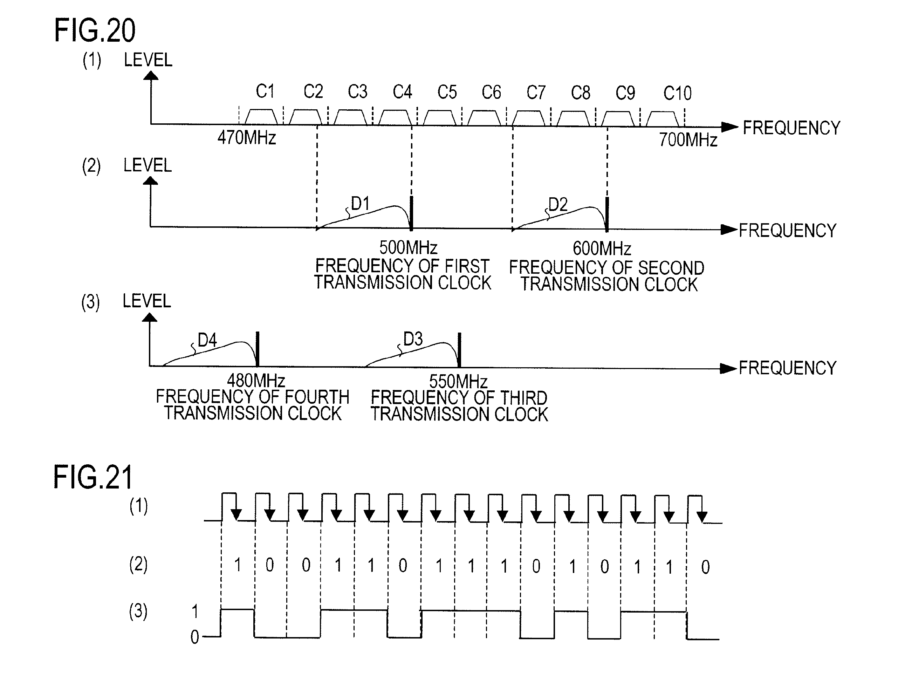

The parallel data output by the reception signal conversion unit 100 are sent to the serial data transmission cable 3 in accordance with a transmission clock which is generated by the transmission clock generation unit 16a after being converted into serial data by the serial data send unit 16. Thereupon, the transmission clock judgment unit 4 receives a channel information input and selects a transmission clock at a frequency with a little radiation noise with respect to the frequency bandwidth of the selected channel from a plurality of transmission clocks of different preset frequencies. Here, the relationship between the frequency bandwidth of the broadcast wave channels and the frequency of the transmission clocks will be described by using Figs. 20 and 21.

Fig. 20(1) shows an example of channel frequency disposition of broadcast waves received by the receiver device according to this embodiment. Terrestrial digital television broadcast waves are taken as an example. Furthermore, Fig. 20(2) shows an example of the distribution of the transmission clock frequency and the frequency components of a transmission signal transmitted by the serial data transmission cable 3 in accordance with the transmission clock. Further, Fig.21(1) shows an example of the signal waveform of the transmission clock and the waveform of the transmission signal in a case where the digital data shown in Fig. 21(2) are transmitted in accordance with the trailing edge of the transmission clock is shown in Fig. 21(3).

Here, the transmission signal of Fig. 21(3) includes a signal with a longer cycle than the transmission clock in Fig. 21(1) and the frequency components of the transmission signal are distributed over a bandwidth at or below the frequency of the transmission clock. For example, the frequency components of the transmission signal of a first transmission clock with a frequency of 500 MHz shown in Fig. 20(2) are distributed over a frequency bandwidth of 500 MHz or less as per frequency component D1. Here, the frequency component D1 overlaps the frequency bandwidths of channels C2, C3, and C4 in Fig. 20(1), and therefore, there is a drop in the signal to noise ratio of the reception waves due to the radiation noise arising from the transmission signal in serial data transmission cable 3 when broadcast waves of these channels are received and degradation of the reception signal arises.

Therefore, in this example, in cases where channels C2, C3, and C4 are selected, a second transmission clock (frequency 600 MHz) is used. Here, the frequency components of the transmission signal of the second transmission clock are distributed as per the frequency component D2 over a bandwidth with a frequency of no more than 600 MHz and there is therefore no overlap with the frequency bandwidth of channels C2, C3, and C4 and unnecessary radiation of the reception waves of each channel can be prevented. However, in cases where channels C7, C8, and C9 are selected when using the second transmission clock, radiation noise affects the reception signals and therefore, in this case, deterioration of the reception signals of these channels can be prevented by using the first transmission clock.

When a transmission clock is selected by the transmission clock judgment unit 4 in accordance with the frequency bandwidth of the selected channels thus selected, the serial data send unit 16 causes the transmission clock generation unit 16a to generate a transmission clock for the selected frequency and sends serial data in accordance with the transmission clock. Thereupon, prior to sending the serial data or at the same time as the serial data, the serial data send unit 16 sends information on the selected transmission clock from the serial data transmission cable 3. Here, the transmission clock information refers to identification information indicating any of the preset plurality of transmission clocks, the frequency of the selected transmission clock, or a synchronization clock for the transmission clock.

In the demodulation unit enclosure 2, the serial data reception unit 20 receives transmission clock information which is transmitted from the antenna vicinity enclosure 1 and a reception clock which is in sync with the transmission clock is generated by the reception clock generation unit 20a. Furthermore, the serial data reception unit 20 extracts digital data from the serial data transmitted via the serial data transmission cable 3 in accordance with the reception clock and converts the digital data into parallel data before supplying same to a data demodulation unit 200. The data demodulation unit 200 is constituted by the (de)multiplexing unit 21 and demodulation processing unit 22 shown in Fig. 1 and the (de) multiplexing unit 21 uses the same format as the multiplexing unit 15 to distribute the signals of each original signal channel multiplexed in the parallel data to the demodulation processing unit 22. The demodulation processing unit 22 then demodulates the respective signals and outputs same to the vehicle-mounted device.

In a receiver device which is constituted as outlined above, in cases where a first transmission clock and a first reception clock which is in sync with the first transmission clock, for example, are initially set, when the first transmission clock is switched to the second transmission clock, transmission clock information representing the second transmission clock is first sent from the serial data send unit 16 of the antenna vicinity enclosure 1 to the demodulation unit enclosure 2 by means of the first transmission clock and serial data are then sent in accordance with the second transmission clock. In so doing, the serial data reception unit 20 of the demodulation unit enclosure 2 is able to read transmission clock information relating to the second transmission clock transmitted by means of the first reception clock that was initially set, and on that basis, is able to switch the first reception clock to the second reception clock in sync with the second transmission clock and extract the digital data from the serial data thus transmitted.

The reception device of this example has the characteristic of performing data transmission by using the transmission clock corresponding to the selected channel frequency bandwidth and the reception clock which is in sync with this transmission clock. Accordingly, the radiation noise caused by the transmission signal in the frequency bandwidth of the selected channel can be reduced and deterioration of the reception signal can be prevented.

Hereinabove, the constitution was such that the frequency bandwidths of the transmission signals of the first and second transmission clocks do not overlap one another. However, the constitution may also be such that there is an overlapping part and a transmission clock corresponding to a transmission signal with a smaller frequency component which overlaps the frequency bandwidth of the selected channel is selected. For example, instead of the second transmission clock, a third transmission clock with a frequency of 550 MHz as shown in Fig. 20(3) may be set. Thus, the frequency component D3 of the transmission signal of the third transmission clock has a part which overlaps the frequency component D1 of the transmission signal of the first transmission clock. However, if the third transmission clock is employed when channel C3 is selected, for example, the overlap of the frequency component of the transmission signal of the frequency bandwidth of channel C3 is smaller than in a case where the first transmission clock is used. Accordingly, if to a lesser degree than a case where the second transmission clock shown in Fig. 20(2) is used, the deterioration of the reception signal of channel C3 can be prevented by using a third transmission clock.

Furthermore, although an example which uses two types of transmission clocks was described hereinbelow, the number of preset transmission clocks may be three or more. In addition, the channel information input to the antenna vicinity enclosure 1 is not limited to one channel. For example, in cases where a plurality of vehicle-mounted device are provided in each seat in the vehicle and receive programs on different channels, separate antennas and signal processing channels are allocated in order to generate output signals for each of the vehicle-mounted devices and a plurality of channel information items are input for each of these channels. In this case, different classes of transmission clocks are set and it is possible to make selections such that none of the frequency bandwidths of the selected channels overlap or select the transmission clock with which there is the smallest overlap.

For example, in cases where channels C2 and C8 are selected, with the first and second transmission clocks in Fig. 20(2), the frequency bandwidths of these channels overlap. However, if, in addition to the first and second transmission clocks, a fourth transmission clock with a frequency of 480 MHz is preset as per Fig. 20(3), by selecting the fourth transmission clock, the effect of the radiation noise due to the frequency component D4 is not exerted on either of the frequency bandwidths of the selected channels C3 and C8 and the deterioration of the reception signal can be prevented.

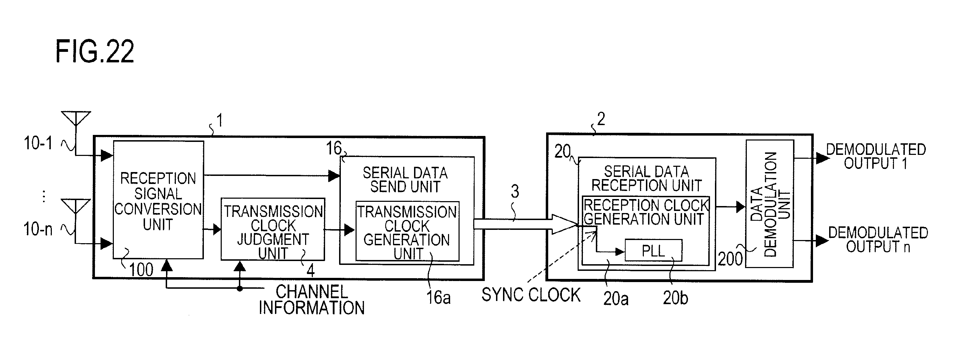

Fig. 22 illustrates a second example of the reception device of this embodiment. In this example, the serial data send unit 16 of the antenna vicinity enclosure 1 embeds the synchronization clock of the transmission clock in the transmission signal as transmission clock information by means of a self-synchronization system and transmits the transmission signal to the serial data reception unit 20 of the demodulation unit enclosure 2. Thereupon, the serial data reception unit 20 extracts the synchronization clock contained in the transmission signal, generates a reception clock which tracks the clock, and reads the serial data in accordance with the reception clock.

For example, the serial data reception unit 20 uses a PLL (Phase Locked Loop) circuit 20b to lock a first reception clock which is generated by the reception clock generation unit 20a to the synchronization clock of the first transmission clock extracted from the transmission signal. Upon sensing that the lock has been removed as a result of the transmission clock generation unit 16a changing the transmission clock to the second transmission clock, the serial data reception unit 20 performs sequential switching between the second transmission clock and reception clocks of a plurality of different frequencies which are preset. Furthermore, switching is repeated until the switched reception clock is locked to the extracted clock and serial data can be extracted from the transmission signal by using the reception clock which has finally been locked.

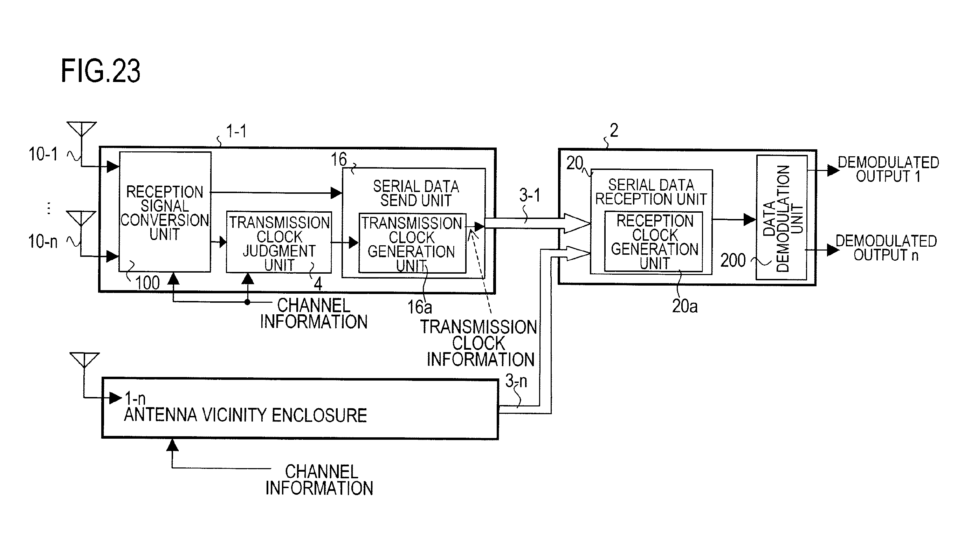

Fig. 23 illustrates a third example of the receiver device of this embodiment. The receiver device of this example comprises a plurality of antenna vicinity enclosures 1 shown in Fig. 19. The demodulation unit enclosure 2 receives transmission clock information items from the antenna vicinity enclosures 1-1, ···, 1-n via serial data transmission cables 3-1, ···, 3-n and uses the reception clocks corresponding to the respective transmission clock information items to extract digital signals from transmission signals transmitted by the respective serial data transmission cable.

According to this example, in cases where there is a multiplicity of broadcast wave channels which are received by providing a plurality of vehicle-mounted devices and where a multiplicity of antennas are arranged in correspondence with the broadcast wave channels and in cases where a plurality of antennas are disposed in distributed fashion in order to achieve diversity reception, it is possible to change the transmission clocks of the transmission signals transmitted by the antenna vicinity enclosures in accordance with the frequency bandwidths of the channels received by the respective antennas. Thus, the radiation noise with respect to the frequency bandwidths of the channels received by the respective antennas can be reduced for each antenna vicinity enclosure and deterioration of the respective reception signals can be prevented. This example can also be applied to a case where the serial data reception unit 20 in the example illustrated in Fig. 5 is provided with a PLL circuit 20b and comprises a plurality of antenna vicinity enclosures 1.

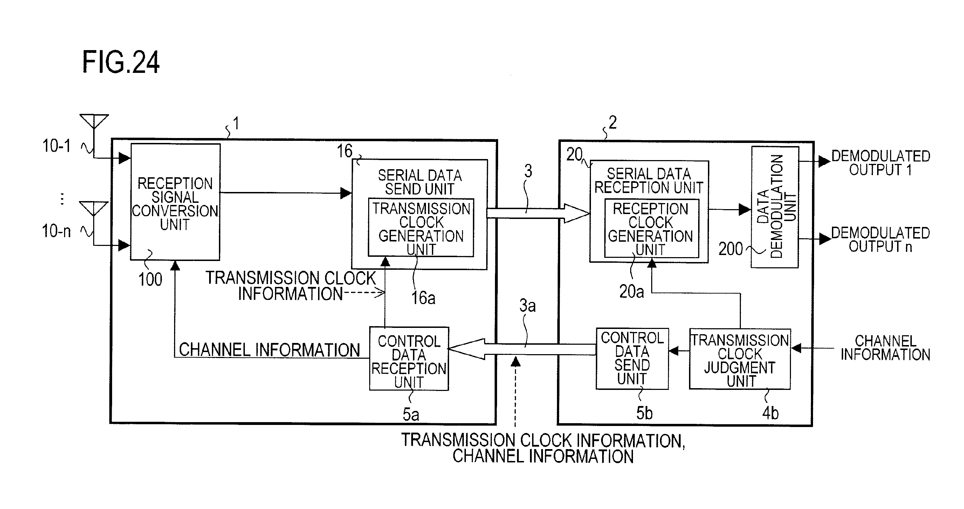

Fig. 24 illustrates a fourth example of the receiver device of this embodiment. The receiver device of this example comprises, in addition to the first serial data transmission cable 3 which connects the antenna vicinity enclosure 1 and demodulation unit enclosure 2, a second serial data transmission cable 3a. Further, a transmission clock judgment unit 4b is provided in the demodulation unit enclosure 2 instead of providing the antenna vicinity enclosure 1 with the transmission clock judgment unit 4 as shown in Fig. 19 or 22 and the demodulation unit enclosure 2 receives a channel information input and selects a transmission clock corresponding to the channel information input.

In other words, the transmission clock judgment unit 4b in the demodulation unit enclosure 2 receives channel information which is selectively entered by the user and selects a transmission clock with little radiation noise with respect to the frequency bandwidth of the selected channel from among a plurality of transmission clocks of different frequencies which are preset. Further, the control information send unit 5b transmits channel information and transmission clock information to the control information reception unit 5a of the antenna vicinity enclosure 1 via the second serial data transmission cable 3a. Thereupon, the control information send unit 5b may also transmit control information by using a transmission clock which is uniquely set or may use a transmission clock which is the same as the transmission clock that is used for the transmission signal of the first serial data transmission cable 3.

The channel information which is received by the control information reception unit 5a is input to the reception signal conversion unit 100 and is used when extracting the reception signal from a reception wave. In addition, the transmission clock information is input to the transmission clock generation unit 16a and the transmission clock generation unit 16a generates a transmission clock on the basis of this input and the serial data transmission unit transmits a transmission signal in accordance with the transmission clock. However, the transmission clock judgment unit 4b causes the reception clock generation unit 20a to generate a reception clock which is in sync with the selected transmission clock and the serial data reception unit 20 extracts serial data from the transmission signal in accordance with the reception clock.

The selected channel information is entered by the user via the user interface of the vehicle-mounted device. Hence, in comparison with the examples shown in Figs. 19 and 22 in which channel information is input to the antenna vicinity enclosure 1 by drawing a signal wire from the vehicle-mounted device, in this example the wiring can be simplified by inputting channel information to the demodulation unit enclosure 2 in the vicinity of the vehicle-mounted device.

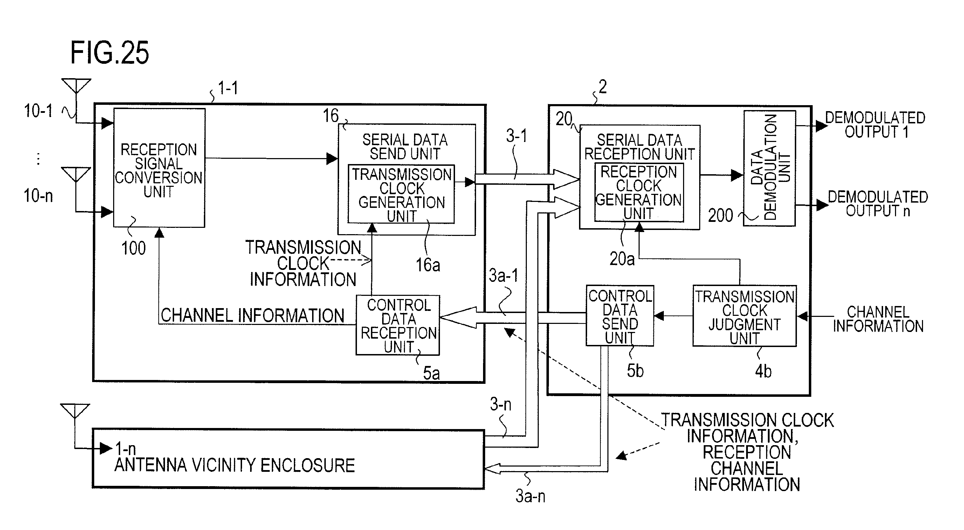

Fig. 25 illustrates a fifth example of the receiver device of this embodiment. The receiver device of this example comprises a plurality of the antenna vicinity enclosure 1 in the example which is shown in Fig. 7. The demodulation unit enclosure 2 receives inputs of a plurality of channel information items of the plurality of antennas, the transmission clock judgment unit 4b provided in the demodulation unit enclosure 2 determines the transmission clocks which are to be used for each of the transmission signals that are transmitted from each of the antenna vicinity enclosures 1-1, ···, 1-n via the first serial data transmission cables 3-1, ···, 3-n, and the transmission clock information is transmitted to the respective antenna vicinity enclosures via the second serial data transmission cables 3a-1, ···, 3a-n.

According to this example, as per the example in Fig. 23, in cases where a multiplicity of antennas are disposed in accordance with the number of vehicle-mounted devices and where a plurality of antennas are disposed in distributed fashion in order to establish diversity reception, it is possible to change the transmission clocks of the transmission signals transmitted by the antenna vicinity enclosures in accordance with the frequency bandwidths of the reception waves received by the respective antennas. Thus, the radiation noise with respect to the frequency bandwidths of the reception waves received by the respective antennas can be reduced and deterioration of the respective reception signals can be prevented. In addition, as per the example of Fig. 24, the wiring can be simplified over a case where channel information is input to the antenna vicinity enclosure 1 by drawing a signal wire from the vehicle-mounted device by inputting channel information to the demodulation unit enclosure 2 near the vehicle-mounted device.

Although the focus of the above example was the relationship between the frequency bandwidths of terrestrial digital television broadcast waves and the frequency bandwidths of the transmission signals of the serial data transmission cable 3, the type of broadcast waves and the frequency of the transmission clocks are not limited to the above examples. For example, this embodiment can be applied to a case where a transmission clock contained in the frequency bandwidth of the broadcast waves is used, which is a case where a UHF (300 MHz to 3GHz) television broadcast is received.

Furthermore, although a receiver device which is provided with a plurality of antennas in order to receive broadcast waves of a plurality of channels was described by way of an example hereinabove, there may be one or a plurality of broadcast wave channels and antennas. In addition, instead of providing a plurality of demodulation processing units, a constitution is also possible in which reception signals of a plurality of channels are demodulated by a single DSP processor.

In addition, although a vehicle-mounted receiver device was described by way of an example hereinabove, receiver devices which are used for other mobile terminals or portable terminals may also be applied in addition to a vehicle-mounted device. Alternatively, this embodiment may be applied to a receiver device such as an installed-type television receiver.

Furthermore, the transmission signals are not limited to a transmission signal which is transmitted by the serial data transmission cable 3. A constitution is also possible in which the output signal output by the multiplexing unit 15 is the transmission signal. In other words, a constitution is also possible in which, in cases where the frequency of the digital signal corresponding to the parallel data which are output in units of a predetermined number of bits by the multiplexing unit 15 overlaps an FM broadcast frequency bandwidth which is VHF (30 MHz to 300 MHz), for example, or another frequency bandwidth, the transmission clock used between the multiplexing unit 15 and serial data send unit 16 when receiving broadcast waves in this frequency bandwidth is switched.

More specifically, in cases where parallel data in eight bit units are each transmitted by the multiplexing unit 15 at 80 Mbps, using a transmission clock of 80 MHz creates an overlap with the frequency bandwidth of the FM broadcast. Accordingly, when an FM broadcast of this frequency bandwidth is received, the radiation noise with respect to the reception waves can be reduced by changing the transmission clock. In this case, the signal line for transmitting the output signal from the multiplexing unit 15, the serial data send unit 16 and the serial data transmission cable 3 all correspond to 'transmission cables' and the part obtained by removing the multiplexing unit 15 from the antenna vicinity enclosure 1 corresponds to the 'first processing unit'.

The receiver device of the example described hereinabove uses a transmission clock with which there is no overlap between the frequency bandwidth of the radiation waves caused by the transmission signal and the frequency bandwidth of the reception waves. Hence, the noise in the frequency bandwidth of the reception waves can be reduced and deterioration of the reception signal can be prevented.

The serial transmission cable 3 of this embodiment is constituted by a wired transmission medium such as a coaxial cable, optical fiber cable. However, as modified examples, the serial transmission cable 3 can also be constituted by Bluetooth, UWB (Ultra-Wideband wireless), or a wireless LAN or other wireless transmission means. In this case, the serial data send unit 16 and serial data reception unit 20 are both constituted by a wireless communication function. Further, the serial data send unit 16 selects a frequency bandwidth with which the frequency bandwidth of the sent signal waves do not overlap the frequency bandwidth of the reception waves received by the receiver device, and sends serial data. Thereupon, frequency information which is selected prior to sending the serial data or at the same time as the serial data is also sent and the serial data reception unit 20 which receives the serial information extracts serial data of the selected frequency bandwidth from the signal waves received in accordance with the frequency information. Thus, noise caused by interference with the reception waves received by the receiver device can be reduced and deterioration of the broadcast wave reception signal can be prevented.

### INDUSTRIAL APPLICABILITY

As per the description hereinabove, the present invention provides a receiver device with which the wiring space is kept to a minimum, which is not susceptible to pulse noise and high frequency noise and with which the hardware parts that need replacing can be reduced even when the specification of the reception waves changes.

## Claims

1. A receiver device, comprising:
a first processing unit which is disposed in the vicinity of a plurality of first antennas, draws a feeder cable from each of the first antennas, converts each of reception signals of the first antennas into first digital signals and outputs the first digital signals;
a first transmission cable which transmits the first digital signals which are output by the first processing unit; and
a second processing unit which receives the first digital signals via the first transmission cable and demodulates the first digital signals.

2. The receiver device according to claim 1, further comprising:
a third processing unit which is disposed in the vicinity of at least one second antenna, draws a feeder cable from the second antenna, and outputs a reception signal of the second antenna to the first processing unit,
wherein the first processing unit converts the reception signal of the second antenna into a digital signal and outputs the digital signal.

3. The receiver device according to claim 1, further comprising:
a third processing unit which is disposed in the vicinity of at least one second antenna, draws a feeder cable from the second antenna, converts the reception signal of the second antenna into a second digital signal, and outputs the second digital signal; and
a second transmission cable which transmits the second digital signal which is output by the third processing unit,
wherein the second processing unit receives the second digital signal via the second transmission cable, and demodulates the second digital signal.

4. The receiver device according to claim 1, wherein the first processing unit performs gain control to the reception signal on the basis of a reception signal level of each first antenna.

5. The receiver device according to claim 1, wherein the second processing unit generates a gain control signal for controlling the gain of the reception signals of the first antennas on the basis of the first digital signals;
the receiver device further comprises a second transmission cable which transmits the gain control signal output by the second processing unit; and
the first processing unit receives the gain control signal via the second transmission cable and performs gain control to the reception signal on the basis of the gain control signal.

6. The receiver device according to claim 1, wherein the second processing unit generates an operating parameter signal for designating the operation of the first processing unit;
the receiver device further comprises a second transmission cable which transmits the operating parameter signal which is output by the second processing unit; and
the first processing unit receives the operating parameter signal via the second transmission cable and operates on the basis of the operating parameter signal.

7. The receiver device according to any of claims 1 to 6, wherein the first processing unit is housed in a first enclosure which is disposed in the vicinity of the first antenna and the second processing unit is housed in a second enclosure which is disposed spaced apart from the first enclosure.

8. A receiver device which is disposed in the vicinity of an antenna which receives broadcast waves of a plurality of channels and which has a first processing unit for outputting a reception signal of a channel selected from the plurality of channels as a transmission signal in sync with a transmission clock, and a second processing unit which extracts the reception signal in sync with a reception clock that is in sync with the transmission clock from the transmission signal transmitted via a transmission cable and demodulates the reception signal,
wherein, when the frequency bandwidth of the selected channel overlaps the frequency bandwidth of a transmission signal by a first transmission clock, the first processing unit outputs the transmission signal by a second transmission clock to produce a transmission signal of a frequency bandwidth with no overlap or little overlap with the frequency bandwidth of the channel.

9. The receiver device according to claim 8,
wherein the first processing unit is provided in a plurality, and
the second processing unit operates for each of the first processing units.

10. A receiver device which is disposed in the vicinity of an antenna which receives broadcast waves of a plurality of channels and which has a first processing unit for outputting a reception signal of a channel selected from the plurality of channels as a transmission signal in sync with a transmission clock, and a second processing unit which extracts the reception signal in sync with a reception clock that is in sync with the transmission clock from the transmission signal transmitted via a transmission cable and demodulates the reception signal,
wherein the first processing unit selects a first or a second transmission clock corresponding to the frequency bandwidth of a transmission signal with little overlap with the frequency bandwidth of the selected channel from among a first frequency bandwidth of a transmission signal by a first transmission clock of a first frequency and a second frequency bandwidth of a transmission signal by a second transmission clock of a second frequency which differs from the first frequency, and outputs the transmission signal in sync with the selected transmission clock.
